# EUROPEAN PATENT APPLICATION

(11) **EP 4 761 093 A1**
(43) Date of publication of application: **17.06.2026**
(21) Application number: 23948398.5
(22) Date of filing: 07.08.2023
(51) Int. Cl.: H02M 7/49

(54) **ELECTRIC POWER CONVERSION APPARATUS**

(71) Applicant: TMEIC Corporation, Tokyo 104-0031 (JP)
(72) Inventor: KOBORI, Kohei, Tokyo 104-0031 (JP); SUGIYAMA, Takashi, Tokyo 104-0031 (JP)
(74) Representative: Winter, Brandl - Partnerschaft mbB
(86) International application number: PCT/JP2023/028714
(87) International publication number: WO 2025/032678

(57) **Abstract**

A power conversion device (1) includes: an arm (A1 to A3) including a plurality of unit converters (5) connected in series, the arm (A1 to A3) being connected to an AC power supply (8); and a controller (7) that controls the arm. Each of the unit converters includes a capacitor (15). The controller includes an inspection unit (52) that is provided to correspond to each unit converter to inspect a corresponding capacitor. The inspection unit measures a time period (Tc) from when charging of the corresponding capacitor is started to when communication between a first communication circuit and a second communication circuit (31, 41) is established, and determines that the capacitor needs to be replaced with a new capacitor when the measured time period is shorter than a determination time period (TcL). Therefore, it can be easily and quickly determined whether or not each of a plurality of the capacitors needs to be replaced with a new capacitor.

## Description

### TECHNICAL FIELD

The present disclosure relates to a power conversion device, and particularly to a power conversion device including a plurality of unit converters connected in series.

### BACKGROUND ART

For example, WO2018/193606 (PTL 1) discloses a power conversion device including: a power converter connected to an alternating-current (AC) power supply; and a controller that controls the power converter. The power converter includes a plurality of unit converters connected in series. Each unit converter includes: a capacitor that stores direct-current (DC) power; a rectifier element that converts AC power supplied from the AC power supply into DC power and supplies the converted DC power to the capacitor; and a switching element that converts the DC power of the capacitor into AC power and supplies the converted AC power to the AC power supply.

### CITATION LIST

### PATENT LITERATURE

PTL 1: WO 2018/193606

### SUMMARY OF INVENTION

### TECHNICAL PROBLEM

In conventional power conversion devices, however, there is a problem that the plurality of capacitors included in the plurality of unit converters deteriorate over time, so that the device performance deteriorates.

As a countermeasure against such a problem, it is conceivable to adopt a method of periodically stopping the operation of the power conversion device to measure a capacitance value of each capacitor and replace a deteriorated capacitor, if any, with a new capacitor. This method may however cause a problem that it takes a long time to measure the capacitance values of the plurality of capacitors, which increases the time period during which the operation of the power conversion device is stopped.

Thus, a main object of the present disclosure is to provide a power conversion device capable of easily and quickly determining whether or not each of a plurality of capacitors included in a plurality of unit converters needs to be replaced with a new capacitor.

### SOLUTION TO PROBLEM

A power conversion device according to the present disclosure includes a power converter and a controller. The power converter includes a plurality of unit converters connected in series, the power converter being connected to an AC power supply.

The controller transmits a control signal to each of the plurality of unit converters.

Each of the plurality of unit converters includes a main circuit, a first communication circuit, and a driver. The main circuit includes: a capacitor that stores DC power; a rectifier element that converts AC power supplied from an AC power supply into DC power and supplies the DC power to the capacitor; and a switching element that converts the DC power of the capacitor into AC power and supplies the AC power to the AC power supply. The first communication circuit is driven by the DC voltage supplied from the capacitor and receives a control signal. The driver drives the switching element according to the control signal received by the first communication circuit.

The controller includes: a control circuit that generates the control signal; a second communication circuit that transmits the control signal generated by the control circuit to the first communication circuit; and an inspection unit provided to correspond to each of the plurality of unit converters to inspect the capacitor included in a corresponding unit converter of the plurality of unit converters. The inspection unit includes a timer and a determiner.

The timer measures at least one of: a first time period from when power supply from the AC power supply to the power converter is started to when communication between the first communication circuit and the second communication circuit is established; and a second time period from when the power supply from the AC power supply to the power converter is stopped to when the communication between the first communication circuit and the second communication circuit is interrupted.

The determiner determines that the capacitor included in the corresponding unit converter is required to be replaced with a new capacitor in at least one of: a first case in which the first time period is shorter than a first determination time period; and a second case in which the second time period is shorter than a second determination time period.

### ADVANTAGEOUS EFFECTS OF INVENTION

In the power conversion device in the present disclosure, at least one of the first time period and the second time period is measured. The first time period is a time period from when charging of the capacitor is started to when the communication between the first communication circuit and the second communication circuit is established. The second time period is a time period from when discharging of the capacitor is started to when the communication between the first communication circuit and the second communication circuit is interrupted. Then, in at least one of the first case in which the first time period is shorter than the first determination time period and the second case in which the second time period is shorter than the second determination time period, it is determined that the capacitor needs to be replaced with a new capacitor. Therefore, it can be easily and quickly determined whether or not each of the plurality of capacitors respectively included in the plurality of unit converters needs to be replaced with a new capacitor.

### BRIEF DESCRIPTION OF DRAWINGS

Fig. 1 is a circuit block diagram showing a configuration of a power conversion device according to a first embodiment of the present disclosure.
Fig. 2 is a circuit block diagram showing a configuration of a unit converter shown in Fig. 1.
Fig. 3 is a block diagram showing a configuration of a power supply shown in Fig. 2.
Fig. 4 is a block diagram showing a configuration of a controller shown in Fig. 1.
Fig. 5 is a block diagram showing a configuration of a control circuit shown in Fig. 4.
Fig. 6 is a circuit block diagram for illustrating initial charging of a capacitor shown in Fig. 2.
Fig. 7 is a block diagram showing a configuration of an inspection unit shown in Fig. 5.
Fig. 8 is a time chart for illustrating an operation of a timer shown in Fig. 7.
Fig. 9 is a time chart showing a change over time in waveform of a DC voltage shown in Fig. 8.
Fig. 10 is a time chart for illustrating an operation of an estimation unit shown in Fig. 7.
Fig. 11 is a flowchart illustrating an operation of the control circuit shown in Figs. 4 to 10.
Fig. 12 is a circuit block diagram showing a modification of the first embodiment.
Fig. 13 is a circuit block diagram showing a main part of a power conversion device according to a second embodiment of the present disclosure.
Fig. 14 is a time chart for illustrating an operation of a timer shown in Fig. 13.
Fig. 15 is a time chart showing a change over time in waveform of a DC voltage shown in Fig. 14.
Fig. 16 is a time chart for illustrating an operation of an estimation unit shown in Fig. 13.
Fig. 17 is a flowchart illustrating an operation of a control circuit including an inspection unit shown in Fig. 13.

### DESCRIPTION OF EMBODIMENTS

### [First Embodiment]

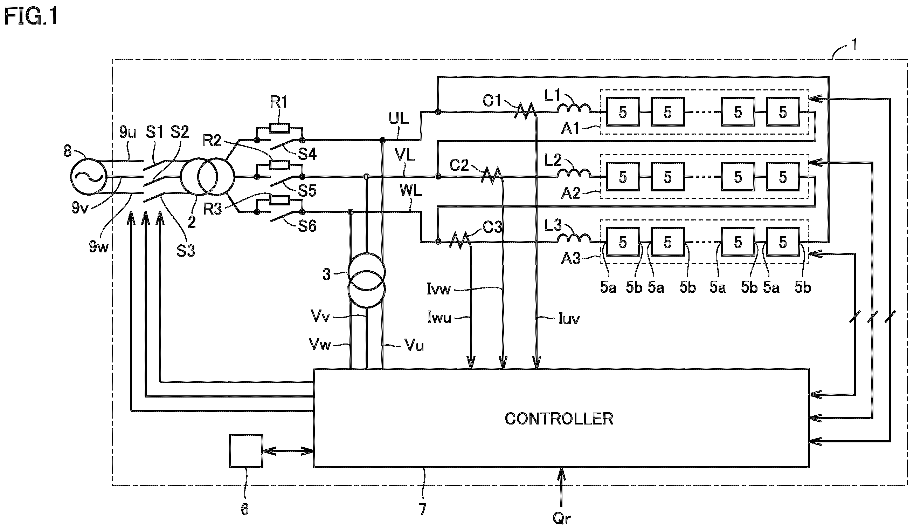

Fig. 1 is a circuit block diagram showing a configuration of a power conversion device 1 according to the first embodiment of the present disclosure. In Fig. 1, power conversion device 1 is connected to power transmission lines 9u, 9v, and 9w through which three-phase AC power is supplied from a commercial AC power supply 8 to a load, and is used as a reactive power compensation device for compensating for reactive power generated in the load or the like.

Power conversion device 1 includes switches S1 to S6, transformers 2 and 3, current-limiting resistors R1 to R3, AC lines UL, VL, and WL, current transformers C1 to C3, reactors L1 to L3, arms A1 to A3, an operation unit 6, and a controller 7.

Switches S1, S2, and S3 have: one terminals connected to power transmission lines 9u, 9v, and 9w, respectively; and the other terminals each connected to a corresponding one of three primary windings of transformer 2. Switches S1 to S3 are controlled by controller 7 to be turned on during a normal operation and to be turned off during an inspection and maintenance of power conversion device 1. Transformer 2 includes three primary windings and three secondary windings, and transmits and receives three-phase AC power.

Current-limiting resistors R1 to R3 have: one terminals each connected to a corresponding one of the three secondary windings of transformer 2; and the other terminals each connected to one end of a corresponding one of AC lines UL, VL, and WL. Current-limiting resistors R1, R2, and R3 limit currents flowing from commercial AC power supply 8 to arms A1, A2, and A3, respectively, when power conversion device 1 is started up.

Switches S4, S5, and S6 are connected in parallel to current-limiting resistors R1, R2, and R3, respectively. Switches S4 to S6 are controlled by controller 7 to be turned on after stabilization of the respective currents flowing through arms A1 to A3 when power conversion device 1 is started up. Transformer 3 feeds three-phase AC voltages Vu, Vv, and Vw back to controller 7. Three-phase AC voltages Vu, Vv, and Vw have values corresponding to the respective AC voltages on AC lines UL, VL, and WL.

Reactor L1 and arm A1 are connected in series between AC lines UL and VL. Reactor L2 and arm A2 are connected in series between AC lines VL and WL. Reactor L3 and arm A3 are connected in series between AC lines WL and UL. In other words, arms A1 to A3 are delta-connected. Arms A1 to A3 (power converters) are controlled by controller 7 to generate three-phase AC power.

Each of arms A1 to A3 includes N unit converters 5 connected in series. Each of N unit converters 5 generates AC power according to a control signal from controller 7. N is an integer of 2 or more and, for example, is 60.

A first terminal 5a of unit converter 5 in the first stage of arm A1 is connected to one terminal of reactor L1. In arm A1, a second terminal 5b of each of unit converters 5 other than unit converter 5 in the last stage is connected to first terminal 5a of adjacent unit converter 5. Second terminal 5b of unit converter 5 in the last stage of arm A1 is connected to one terminal of reactor L2.

First terminal 5a of unit converter 5 in the first stage of arm A2 is connected to the other terminal of reactor L2. In arm A2, second terminal 5b of each of unit converters 5 other than unit converter 5 in the last stage is connected to first terminal 5a of adjacent unit converter 5. Second terminal 5b of unit converter 5 in the last stage of arm A2 is connected to one terminal of reactor L3.

First terminal 5a of unit converter 5 in the first stage of arm A3 is connected to the other terminal of reactor L3. In arm A3, second terminal 5b of each of unit converters 5 other than unit converter 5 in the last stage is connected to first terminal 5a of adjacent unit converter 5. Second terminal 5b of unit converter 5 in the last stage of arm A3 is connected to the other terminal of reactor L1.

Reactors L1, L2, and L3 suppress the circulating currents flowing through arms A1, A2, and A3, respectively. Reactors L1 to L3 may be provided separately from arms A1 to A3, or may be inductance components of arms A1 to A3. Current transformers C1, C2, and C3 detect alternating currents Iuv, Ivw, and Iwu flowing through arms A1, A2, and A3, respectively, and feed the detected currents back to controller 7.

Operation unit 6 includes: a plurality of buttons operated by a user of power conversion device 1; an image display that displays various types of information; and the like. The user operates operation unit 6 to make it possible to set various types of information, and to start up and stop power conversion device 1. Operation unit 6 outputs a signal indicating the details of the operation to controller 7.

In response to the signal from operation unit 6, controller 7 turns on and off switches S1 to S3. Further, based on a reactive power command value Qr, three-phase AC voltages Vu, Vv, and Vw, AC currents Iuv, Ivw, and Iwu, a DC voltage VDC described later, and the like, controller 7 generates a control signal GC, a control signal GB, an ON command Son and the like, each of which is described later, to control each of three arms A1 to A3 (i.e., each of 3 × N unit converters 5).

Reactive power command value Qr is given, for example, from a central control unit (not shown) in a power system including commercial AC power supply 8. Power conversion device 1 supplies reactive power having a value corresponding to reactive power command value Qr to power transmission lines 9u, 9v, and 9w.

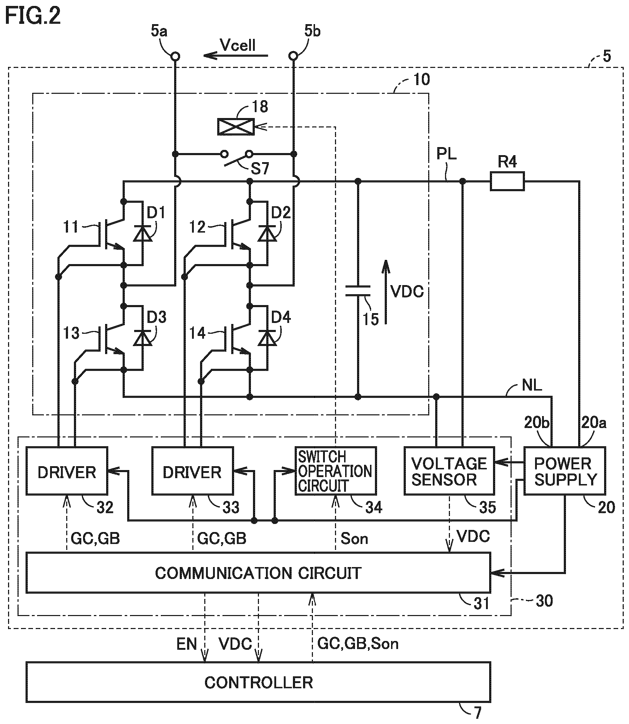

Fig. 2 is a circuit block diagram showing a configuration of unit converter 5 shown in Fig. 1. In Fig. 2, unit converter 5 includes a main circuit 10, a resistance element R4, a power supply 20, and a control circuit 30. Main circuit 10 is configured of a full-bridge circuit including a capacitor.

Specifically, main circuit 10 includes switching elements 11 to 14, diodes (rectifier elements) D1 to D4, and a capacitor 15. Main circuit 10 turns on and off switching elements 11 to 14 to output, between first terminal 5a and second terminal 5b, a voltage pulse having an amplitude corresponding to voltage VDC across terminals of capacitor 15, and thereby, converts DC power into AC power.

Each of switching elements 11 to 14 is a self-arc-extinguishing-type power semiconductor element and is configured, for example, of an insulated gate bipolar transistor (IGBT). Switching elements 11 and 13 are connected in series between a DC line PL and a DC line NL. Switching elements 12 and 14 are connected in series between DC lines PL and NL. Switching elements 11 and 12 have collectors each connected to DC line PL, and switching elements 13 and 14 have emitters each connected to DC line NL. A connection point between an emitter of switching element 11 and a collector of switching element 13 is connected to first terminal 5a. A connection point between an emitter of switching element 12 and a collector of switching element 14 is connected to second terminal 5b.

Diodes D1, D2, D3, and D4 are connected in antiparallel to switching elements 11, 12, 13, and 14, respectively. Capacitor 15 is connected between DC lines PL and NL, and stores DC power.

Control circuit 30 controls the state of conduction (on and off) of each of switching elements 11 to 14. Switching elements 11 and 13 are turned on and off complementarily to each other. Switching elements 12 and 14 are turned on and off complementarily to each other. As shown in Fig. 2, when a voltage from second terminal 5b as a reference to first terminal 5a is defined as a cell voltage Vcell, this cell voltage Vcell is controlled by turning on and off each of switching elements 11 to 14.

Specifically, when switching elements 11 and 14 are on and switching elements 12 and 13 are off, cell voltage Vcell is equal to voltage VDC across the terminals of capacitor 15. When switching elements 11 and 12 are on and switching elements 13 and 14 are off, cell voltage Vcell is 0V. When switching elements 11 and 12 are off and switching elements 13 and 14 are on, cell voltage Vcell is 0V. When switching elements 11 and 14 are off and switching elements 12 and 13 are on, cell voltage Vcell is equal to a voltage obtained by inverting the polarity of voltage VDC across the terminals of capacitor 15.

The entire voltage in each of arms A1 to A3 is the sum of cell voltages Vcell in N unit converters 5 included in each of arms A1 to A3. Thus, the entire voltage in each of arms A1 to A3 can be controlled by controlling each of switching elements 11 to 14 in each unit converter 5 to be turned on and off.

Main circuit 10 further includes a switch S7. Switch S7 is connected between first terminal 5a and second terminal 5b. Switch S7 is configured to be closed in response to a command from control circuit 30 to make it possible to cause a short circuit between first terminal 5a and second terminal 5b.

Resistance element R4 is connected between DC line PL and an input terminal 20a of power supply 20. Resistance element R4 steps down voltage VDC across the terminals of capacitor 15 and supplies it to power supply 20, and also limits the current flowing from capacitor 15 to power supply 20.

Power supply 20 has an input terminal 20b connected to DC line NL. Power supply 20 further steps down a DC voltage Vin supplied from capacitor 15 through resistance element R4 to generate a power supply voltage of control circuit 30. In other words, each unit converter 5 forms a cell of a self-contained type that is capable of supplying electric power from main circuit 10 to control circuit 30.

Control circuit 30 includes a communication circuit 31 (a first communication circuit), drivers 32 and 33, a switch operation circuit 34, and a voltage sensor 35. Control circuit 30 is driven by a power supply voltage supplied from power supply 20, exchanges signals with controller 7, and controls main circuit 10.

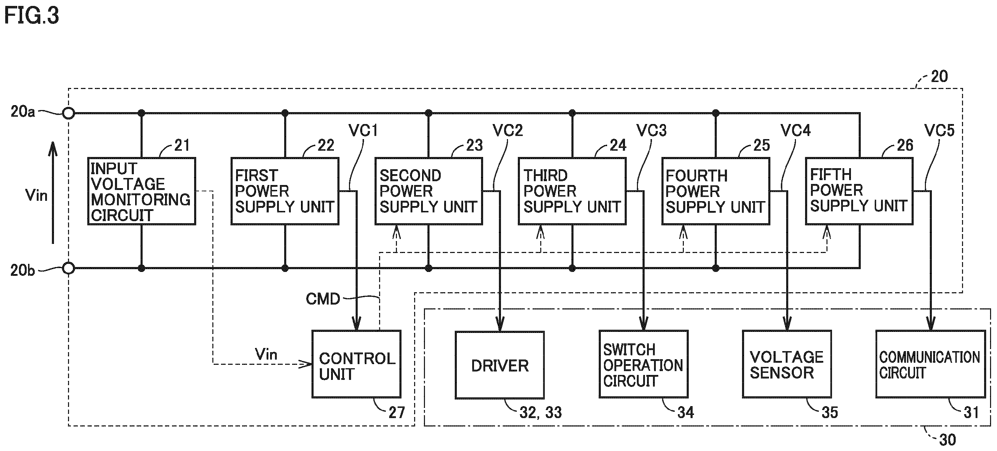

Fig. 3 is a block diagram showing a configuration of power supply 20 shown in Fig. 2. In Fig. 3, power supply 20 includes an input voltage monitoring circuit 21, power supply units 22 to 26, and a control unit 27. Input voltage monitoring circuit 21 detects DC voltage Vin between input terminals 20a and 20b, and outputs a signal indicating the detected value to control unit 27.

First power supply unit 22 steps down DC voltage Vin to generate a power supply voltage VC1 of control unit 27. Control unit 27 is driven by power supply voltage VC1 and generates a start-up command signal CMD based on DC voltage Vin indicated by the output signal from input voltage monitoring circuit 21. When DC voltage Vin is lower than a first threshold voltage Vt1, start-up command signal CMD is set at an "L" level as an inactivation level.

When DC voltage Vin rises and exceeds first threshold voltage Vt1, start-up command signal CMD is raised from the "L" level as an inactivation level to an "H" level as an activation level. When DC voltage Vin falls below a second threshold voltage Vt2, start-up command signal CMD is lowered from the "H" level as an activation level to the "L" level as an inactivation level. First threshold voltage Vt1 is set at a voltage higher than second threshold voltage Vt2.

Start-up command signal CMD is supplied to power supply units 23 to 26. When start-up command signal CMD is at the "H" level as an activation level, power supply units 23 to 26 each are activated to output a corresponding one of power supply voltages VC2 to VC5. When start-up command signal CMD is at the "L" level as an inactivation level, power supply units 23 to 26 are deactivated to stop outputting power supply voltages VC2 to VC5.

Specifically, when signal CMD is at the "H" level, second power supply unit 23 steps down DC voltage Vin to generate power supply voltage VC2, and supplies power supply voltage VC2 to drivers 32 and 33. When signal CMD is at the "H" level, third power supply unit 24 steps down DC voltage Vin to generate power supply voltage VC3, and supplies power supply voltage VC3 to switch operation circuit 34. When signal CMD is at the "H" level, fourth power supply unit 25 steps down DC voltage Vin to generate power supply voltage VC4, and supplies power supply voltage VC4 to voltage sensor 35.

When signal CMD is at the "H" level, fifth power supply unit 26 steps down DC voltage Vin to generate power supply voltage VC5, and supplies power supply voltage VC5 to communication circuit 31. When signal CMD is set at the "L" level as an inactivation level, power supply units 23 to 26 stop outputting power supply voltages VC2 to VC5.

Referring again to Fig. 2, communication circuit 31 is driven by power supply voltage VC5 supplied from fifth power supply unit 26 to communicate with controller 7 through a communication line (not shown). Further, when fifth power supply unit 26 starts supplying power supply voltage VC5, communication circuit 31 raises a signal EN from the "L" level to the "H" level. Signal EN at the "H" level indicates that the communication between communication circuit 31 and controller 7 has been established.

When fifth power supply unit 26 stops supplying power supply voltage VC5, communication circuit 31 lowers signal EN from the "H" level to the "L" level. Signal EN at the "L" level indicates that the communication between communication circuit 31 and controller 7 has been interrupted.

In a time period during which power supply voltage VC5 is supplied from fifth power supply unit 26, communication circuit 31 receives control signal GC for controlling switching elements 11 to 14 and control signal GB for turning off all of switching elements 11 to 14, and then, supplies the received control signals GC and GB to each of drivers 32 and 33. Further, communication circuit 31 receives ON command signal Son for turning on switch S7, and supplies the received ON command signal Son to switch operation circuit 34.

Driver 32 is driven by power supply voltage VC2 supplied from second power supply unit 23, and turns on or off each of switching elements 11 and 13 in response to control signal GC. Driver 32 turns off switching elements 11 and 13 in response to control signal GB.

Driver 33 is driven by power supply voltage VC2 supplied from second power supply unit 23, and turns on or off each of switching elements 12 and 14 in response to control signal GC. Driver 33 turns off switching elements 12 and 14 in response to control signal GB.

Switch operation circuit 34 is driven by power supply voltage VC3 supplied from third power supply unit 24, supplies a current to an excitation coil 18 in response to ON command signal Son, and turns on switch S7. During the normal operation, the current supply to excitation coil 18 is stopped, and thus, switch S7 is turned off (opened).

Voltage sensor 35 is driven by power supply voltage VC4 supplied from fourth power supply unit 25, detects voltage VDC across the terminals of capacitor 15, and outputs a signal indicating the detected value to communication circuit 31. Communication circuit 31 transmits the signal indicating the detected value of DC voltage VDC to controller 7.

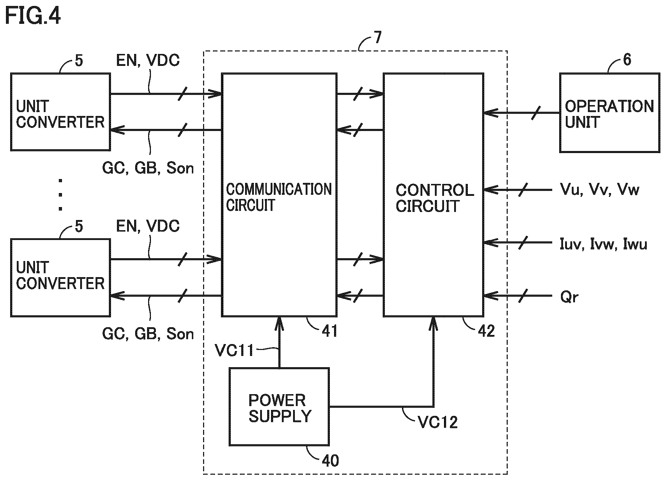

Fig. 4 is a block diagram showing a configuration of controller 7. In Fig. 4, controller 7 includes a power supply 40, a communication circuit 41 (a second communication circuit), and a control circuit 42. When power conversion device 1 is connected to power transmission lines 9u, 9v, and 9w (Fig. 1), power supply 40 at all times generates a power supply voltage VC11 for communication circuit 41 and a power supply voltage VC12 for control circuit 42. Thus, communication circuit 41 and control circuit 42 can be operated even when power conversion device 1 is stopped.

Communication circuit 41 is driven by power supply voltage VC11 supplied from power supply 40, and exchanges signals between control circuit 42 and 3 × N unit converters 5 included in three arms A1 to A3 (Fig. 1). In other words, communication circuit 41 receives signal EN and the signal indicating DC voltage VDC that are transmitted from each unit converter 5, and supplies the received signals to control circuit 42. Further, communication circuit 41 transmits 3 × N sets of signals GC, GB, and Son generated by control circuit 42 to 3 × N unit converters 5.

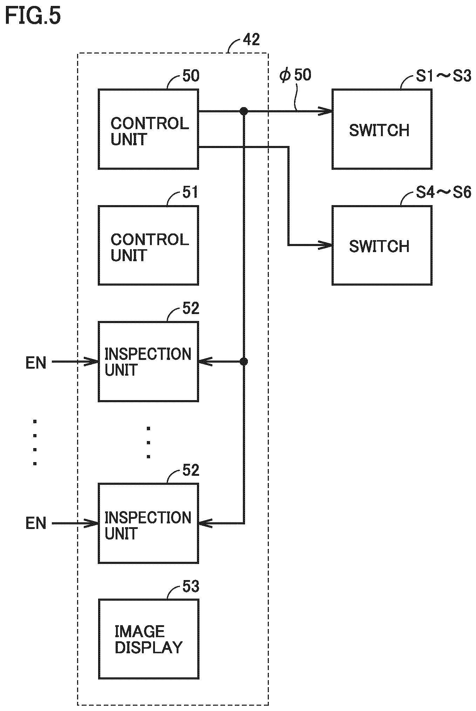

Fig. 5 is a block diagram showing a configuration of control circuit 42. In Fig. 5, control circuit 42 includes control units 50 and 51, 3 × N inspection units 52, and an image display 53. Control unit 50 controls switches S1 to S3 according to signals from operation unit 6. In other words, when the user of power conversion device 1 operates operation unit 6 (Fig. 1) to instruct start-up of power conversion device 1, operation unit 6 outputs a signal instructing start-up of power conversion device 1.

In response to the signal, control unit 50 raises a signal ϕ50 from the "L" level to the "H" level. When signal ϕ50 is at the "L" level, switches S1 to S3 are turned off. When signal ϕ50 is raised to the "H" level, switches S1 to S3 are turned on. When switches S1 to S3 are turned on, AC power is supplied from commercial AC power supply 8 to arms A1 to A3 via switches S1 to S3, transformer 2, current-limiting resistors R1 to R3, and reactors L1 to L3, and then, initial charging of capacitor 15 is started.

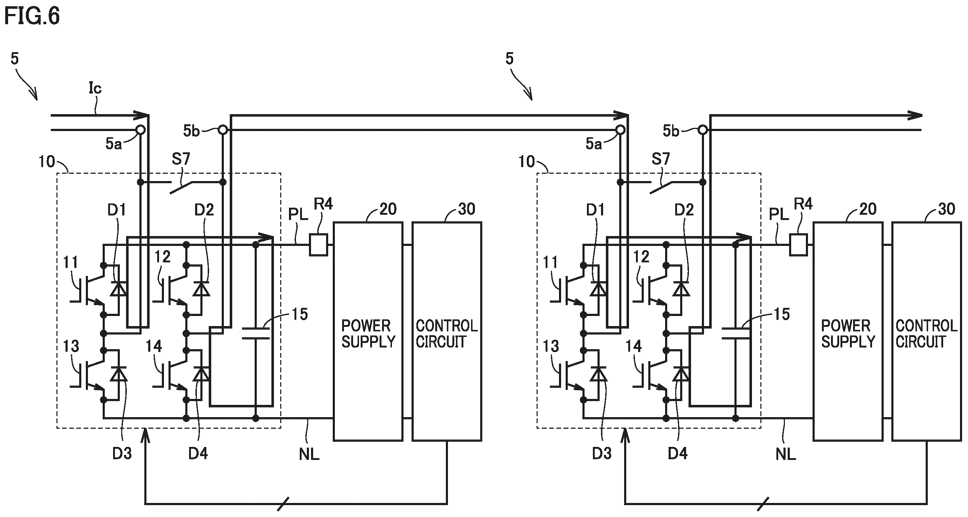

Fig. 6 is a circuit block diagram for illustrating initial charging of capacitor 15. Fig. 6 shows two unit converters 5 adjacent to each other. Unit converter 5 on the left side in Fig. 6 is unit converter 5 in the first stage of arm A1, and unit converter 5 on the right side in Fig. 6 is unit converter 5 in the second stage of arm A1. During initial charging, switch S7 is opened and switching elements 11 to 14 are turned off.

When AC voltage Vu on AC line UL (Fig. 1) is higher than AC voltage Vv on AC line VL, a current Ic flows through a path from first terminal 5a of unit converter 5 on the left side to second terminal 5b via diode D1, capacitor 15, and diode D4, as indicated by arrows in Fig. 6. Capacitor 15 is charged with current Ic, and voltage VDC across the terminals of capacitor 15 rises.

Current Ic flows from second terminal 5b of unit converter 5 on the left side into first terminal 5a of unit converter 5 on the right side, and then flows via diode D1, capacitor 15, and diode D4 into second terminal 5b. Capacitor 15 of unit converter 5 on the right side is charged with current Ic, and voltage VDC across the terminals of capacitor 15 rises.

In contrast, when AC voltage Vu on AC line UL is lower than AC voltage Vv on AC line VL, current Ic flows through a path from second terminal 5b of unit converter 5 on the right side to first terminal 5a via diode D2, capacitor 15, and diode D3. Capacitor 15 is charged with current Ic, and voltage VDC across the terminals of capacitor 15 rises.

Current Ic flows from first terminal 5a of unit converter 5 on the right side into second terminal 5b of unit converter 5 on the left side, and flows through a path leading to first terminal 5a via diode D2, capacitor 15, and diode D3. Capacitor 15 of unit converter 5 on the left side is charged with current Ic, and voltage VDC across the terminals of capacitor 15 rises. In this way, capacitors 15 of all unit converters 5 in each of arms A1 to A3 are charged.

Since N unit converters 5 are connected in series in each of arms A1 to A3, voltage VDC of capacitor 15 in each of unit converters 5 rises to a value obtained by dividing the peak value of the voltage (phase-to-phase voltages Vuv, Vvw, Vwu) applied to each of arms A1 to A3 by number N of unit converters 5 included in each of arms A1 to A3.

Referring again to Fig. 5, when the initial charging of capacitor 15 ends, control unit 50 turns on switches S4 to S6. This causes a short circuit across the terminals of each of current-limiting resistors R1 to R3 (Fig. 1), and each of the three secondary windings of transformer 2 is directly connected to a corresponding one of AC lines UL, VL, and WL.

When the user of power conversion device 1 operates operation unit 6 (Fig. 1) to issue an instruction to stop power conversion device 1, operation unit 6 outputs a signal giving an instruction to stop power conversion device 1. In response to this signal, control unit 50 turns off switches S1 to S6. Thereby, the power supply from commercial AC power supply 8 to arms A1 to A3 is stopped.

When the initial charging of capacitor 15 ends, control unit 51 generates 3 × N sets of control signals GC and GB based on signals and the like indicating: three-phase AC voltages Vu, Vv, and Vw from transformer 3; three-phase AC currents Iuv, Ivw, and Iwu detected by current transformers C1 to C3; and 3 × N DC voltages VDC supplied from 3 × N unit converters 5 through communication circuit 41. Then, control unit 51 outputs the signals to communication circuit 41.

In other words, based on AC currents Iuv, Ivw, and Iwu from current transformers C1, C2, and C3, control unit 51 obtains three-phase AC currents Iu, Iv, and Iw at levels corresponding to the AC currents flowing through AC lines UL, VL, and WL. Note that Iu = Iuv - Iwu, Iv = Ivw - Iuv, and Iw = Iwu - Ivw.

Control unit 51 obtains reactive power Q based on three-phase AC voltages Vu, Vv, and Vw from transformer 3 and three-phase AC currents Iu, Iv, and Iw, and obtains a deviation ΔQ between a reactive power command value Qr and reactive power Q, i.e., ΔQ = Qr - Q.

Control unit 51 generates 3 × N voltage command values VDCr corresponding to 3 × N unit converters 5 based on AC currents Iuv, Ivw, and Iwu from current transformers C1 to C3, three-phase AC voltages Vu, Vv, and Vw from transformer 3, and the like.

Control unit 51 obtains a deviation ΔVDC between each voltage command value VDCr and DC voltage VDC corresponding thereto. Control unit 51 generates three-phase AC voltage command values Vuvr, Vvwr, and Vwur such that the integrated value of voltage deviation ΔVDC becomes zero and the integrated value of reactive power deviation ΔQ becomes zero.

In other words, control unit 51 performs active current control on each unit converter 5 such that the integrated value of voltage deviation ΔVDC becomes zero, and performs reactive current control on each unit converter 5 such that the integrated value of reactive power deviation ΔQ becomes zero. Based on three-phase AC voltage command values Vuvr, Vvwr, and Vwur, each unit converter 5 in arms A1 to A3 is operated, DC voltage VDC is set at voltage command value VDCr, and reactive power Q is set at reactive power command value Qr.

Specifically, control unit 51 generates 3 × N sets of control signals GC and GB for power conversion device 1 to output voltages corresponding to three-phase AC voltage command values Vuvr, Vvwr, and Vwur, for example, according to pulse width modulation (PWM) control.

Communication circuit 41 transmits 3 × N sets of control signals GC and GB generated by control unit 51 to 3 × N unit converters 5 included in arms A1 to A3. In each unit converter 5, control signals GC and GB are received by communication circuit 31 and supplied to each of drivers 32 and 33. Drivers 32 and 33 turn on and off switching elements 11 to 14 according to control signals GC and GB. Thereby, voltage VDC across the terminals of capacitor 15 is converted into an AC voltage.

Further, when control unit 51 detects an abnormality such as a short-circuit fault of the switching element in any one of 3 × N unit converters 5 based on 3 × N DC voltages VDC and the like, control unit 51 outputs ON command signal Son for switch S7 to this unit converter 5 having a fault. ON command signal Son is supplied via communication circuits 41 and 31 to switch operation circuit 34 in unit converter 5 having a fault.

In response to ON command signal Son, switch operation circuit 34 supplies a current to excitation coil 18 to turn on switch S7. This causes a short circuit between first terminal 5a and second terminal 5b of unit converter 5 having a fault. Further, the information specifying unit converter 5 having a fault is displayed, for example, on an image display of operation unit 6.

Further, when the user of power conversion device 1 operates operation unit 6 (Fig. 1) to issue an instruction to stop power conversion device 1, operation unit 6 outputs a signal giving an instruction to stop power conversion device 1. In response to this signal, the operation of control unit 51 is stopped, and switching elements 11 to 14 in each of all unit converters 5 are turned off.

When the operation time period of power conversion device 1 reaches a prescribed time period (for example, one year), the operation is stopped and inspections and maintenance are performed, and thereafter, power conversion device 1 is started up again. In other words, power conversion device 1 is repeatedly started up and stopped at prescribed time intervals. Based on output signal ϕ50 from control unit 50 and signal EN from the corresponding unit converter 5, inspection unit 52 inspects the corresponding capacitor 15 each time power conversion device 1 is started up. Then, inspection unit 52 determines whether or not this capacitor 15 needs to be replaced with a new capacitor.

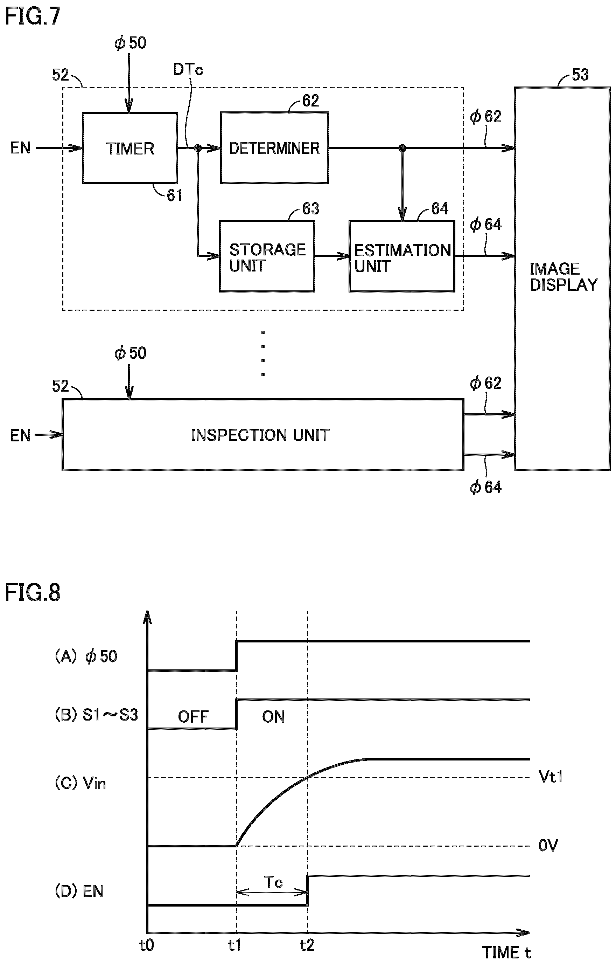

Fig. 7 is a block diagram showing a configuration of inspection unit 52. In Fig. 7, inspection unit 52 includes a timer 61, a determiner 62, a storage unit 63, and an estimation unit 64. Timer 61 starts measuring the time period when output signal ϕ50 from control unit 50 is raised from the "L" level to the "H" level, and stops measuring the time period when signal EN from the corresponding unit converter 5 is raised from the "L" level to the "H" level. Then, timer 61 outputs a signal DTc indicating a time period Tc that has been measured.

In other words, timer 61 measures time period Tc from when switches S1 to S3 are turned on and charging of capacitor 15 is started to when communication between communication circuits 31 and 41 is established. Then, timer 61 outputs signal DTc indicating the measured time period Tc.

Fig. 8 is a time chart for illustrating the operation of timer 61. In Fig. 8, (A) shows a waveform of output signal ϕ50 from control unit 50, (B) shows the state of conduction of each of switches S1 to S3, (C) shows a waveform of DC input voltage Vin (Fig. 3) of power supply 20, and (D) shows a waveform of output signal EN from communication circuit 31.

When power conversion device 1 is stopped (time t0), signal ϕ50 is set at the "L" level, switches S1 to S3 are turned off, DC voltage Vin is set at 0V, and signal EN is set at the "L" level.

When an instruction to start up power conversion device 1 is issued at time t1, signal ϕ50 is raised to the "H" level, and switches S1 to S3 are turned on. Thereby, charging of capacitor 15 is started, voltage VDC across the terminals of capacitor 15 rises, and DC input voltage Vin of power supply 20 rises.

When DC input voltage Vin of power supply 20 rises and exceeds first threshold voltage Vt1, power supply voltage VC5 is supplied from fifth power supply unit 26 (Fig. 3) to communication circuit 31, and communication circuit 31 raises signal EN from the "L" level to the "H" level. Timer 61 measures time period Tc from time t1 to time t2, and outputs signal DTc indicating the measured time period Tc.

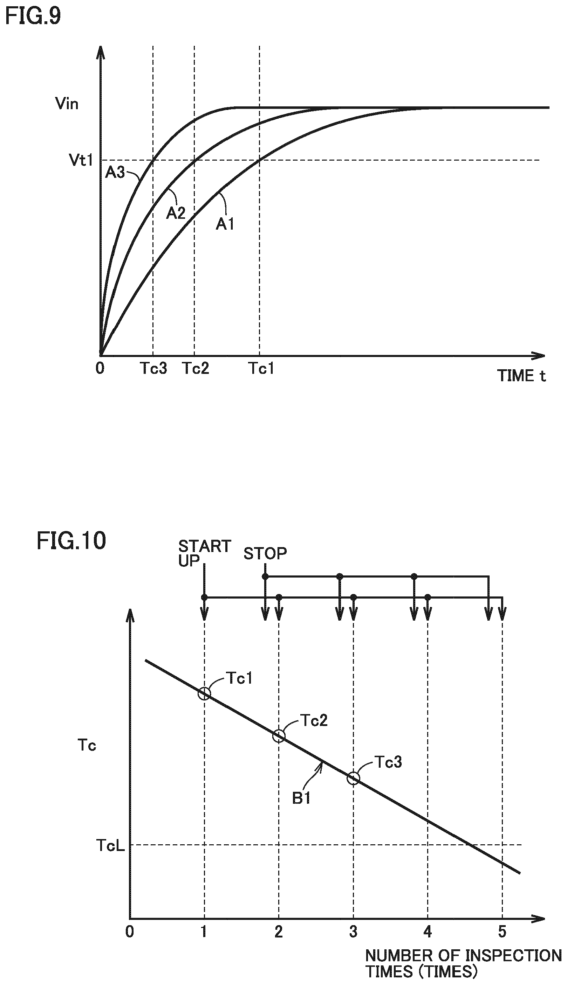

Fig. 9 is a time chart showing a change over time in waveform of DC voltage Vin shown in Fig. 8. In Fig. 9, a curve A1 shows a waveform occurring when the deterioration level of capacitor 15 is low, a curve A2 shows a waveform occurring when the deterioration level of capacitor 15 is middle, and a curve A3 shows a waveform occurring when the deterioration level of capacitor 15 is high.

As the deterioration level of capacitor 15 rises, the capacitance value of capacitor 15 decreases, the rate of rising of voltage VDC across the terminals of capacitor 15 rises, and the rate of rising of DC voltage Vin rises. Thus, as the deterioration level of capacitor 15 rises, time period Tc taken until DC voltage Vin exceeds first threshold voltage Vt1 shortens.

Fig. 9 shows the state in which time periods Tc1, Tc2, and Tc3 respectively measured from curves A1, A2, and A3 are sequentially reduced (Tc1 > Tc2 > Tc3). Thus, the deterioration level of capacitor 15 can be determined from this time period Tc.

Referring again to Fig. 7, determiner 62 compares the length of time period Tc indicated by signal DTc with the length of a determination time period TcL, and outputs a signal ϕ62 indicating the comparison result. When time period Tc is longer than determination time period TcL, signal ϕ62 is set at the "L" level. When time period Tc is shorter than determination time period TcL, signal ϕ62 is set at the "H" level. Determination time period TcL is obtained in advance by experiments.

Signal ϕ62 at the "L" level indicates that the deterioration level of the corresponding capacitor 15 is low and the corresponding capacitor 15 does not need to be replaced with a new capacitor. A signal ϕ53 at the "H" level indicates that the deterioration level of the corresponding capacitor 15 is high and the corresponding capacitor 15 needs to be replaced with a new capacitor.

When power conversion device 1 is new, capacitor 15 is also new, and thus, signal ϕ62 indicating the first determination result must be set at the "L" level. It is not until the second determination that signal ϕ62 is set at the "H" level. Signal ϕ62 is given to estimation unit 64 and image display 53.

Storage unit 63 stores signal DTc each time this signal DTc is output from timer 61. When power conversion device 1 is started up and stopped a plurality of times, a plurality of signals DTc are sequentially output from timer 61, and sequentially stored in storage unit 63.

When output signal ϕ62 from determiner 62 is at the "L" level, i.e., when it is determined that the corresponding capacitor 15 does not need to be replaced with a new capacitor, estimation unit 64 estimates the timing of replacement of capacitor 15 based on the plurality of signals DTc stored in storage unit 63, and then outputs a signal indicating the estimation result.

Fig. 10 is a diagram for illustrating the operation of estimation unit 64. It is assumed that power conversion device 1 is started up and stopped m times, capacitor 15 is inspected m times, and m signals DTc1 to DTcm are stored in storage unit 54. In this case, m is an integer of 2 or more. Fig. 10 shows a case in which m = 3.

Estimation unit 64 reads m signals DTc1 to DTcm from storage unit 63 and converts the read signals DTc1 to DTcm into time periods Tc1 to Tcm. Then, estimation unit 64 writes time periods Tc1 to Tcm in Fig. 10 in which the horizontal axis represents the number of inspection times and the vertical axis represents time period Tc.

Then, estimation unit 64 draws an approximate curve B1 passing through time periods Tc1 to Tcm, and obtains the number of inspection times X at which curve B1 falls below determination time period TcL. Estimation unit 64 estimates that capacitor 15 should be replaced with a new capacitor at the time when power conversion device 1 is stopped before the X-th inspection, i.e., at the time when power conversion device 1 is stopped at the (X - 1)-th inspection. Fig. 10 shows a case in which X = 5. Estimation unit 64 outputs a signal ϕ64 indicating the estimation result to image display 53.

Image display 53 displays the determination result indicated by output signal ϕ62 from determiner 62 and the estimation result indicated by output signal ϕ64 from estimation unit 64. Image display 53 displays the determination result and the estimation result for each of 3 × N capacitors 15.

Note that image display 53 may be caused to display: information specifying capacitor 15 determined to be replaced with a new capacitor; or information specifying capacitor 15 estimated to be replaced next time when power conversion device 1 is stopped. Further, image display 53 may be included in operation unit 6 (Fig. 1).

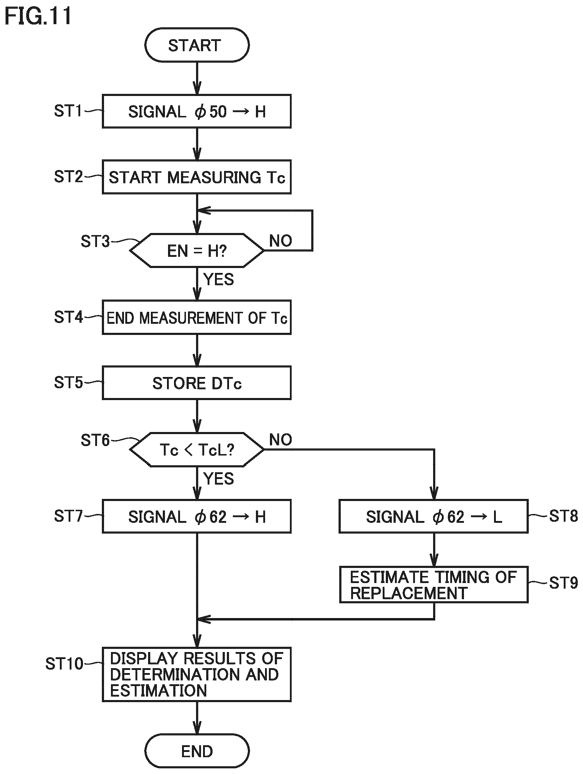

Fig. 11 is a flowchart illustrating the operation of control circuit 42 shown in Figs. 4 to 10. When operation unit 6 issues an instruction to start up power conversion device 1, then in step ST1, control unit 50 raises signal ϕ50 from the "L" level to the "H" level. When signal ϕ50 is set at the "H" level, switches S1 to S3 are turned on to start charging of capacitor 15, and in step ST2, timer 61 starts measuring time period Tc (Fig. 8).

In step ST3, timer 61 waits until signal EN from the corresponding unit converter 5 is set at the "H" level. Signal EN at the "H" level indicates that the communication between communication circuit 31 (Fig. 2) in unit converter 5 and communication circuit 41 (Fig. 4) in controller 7 has been established.

When signal EN is set at the "H" level, timer 61 ends the measurement of time period Tc in step ST4, and outputs signal DTc indicating the measured time period Tc. In step ST5, signal DTc is stored in storage unit 63.

In step ST6, determiner 62 determines whether or not time period Tc is shorter than determination time period TcL. When Tc < TcL, signal ϕ62 is set at the "H" level in step ST7. Signal ϕ62 at the "H" level indicates that the corresponding capacitor 15 needs to be replaced with a new capacitor.

When Tc > TcL, signal ϕ62 is set at the "L" level in step ST8. Signal ϕ62 at the "L" level indicates that the corresponding capacitor 15 does not need to be replaced with a new capacitor.

In step ST9, based on the plurality of signals DTc stored in storage unit 63, estimation unit 64 estimates the timing at which the corresponding capacitor 15 should be replaced with a new capacitor. In step ST10, image display 53 displays the determination result by determiner 62 and the estimation result by estimation unit 64.

The user of power conversion device 1 determines whether or not to replace capacitor 15 based on the results displayed on image display 53. In other words, when it is determined that capacitor 15 should be replaced with a new capacitor, the user replaces capacitor 15 with a new capacitor next time when power conversion device 1 is stopped. Since power conversion device 1 has already been started up when the determination result is displayed, capacitor 15 is not immediately replaced at that time, but replaced next time when power conversion device 1 is stopped. Further, when the timing at which capacitor 15 should be replaced with a new capacitor is estimated, the user prepares a new capacitor 15 that will be required at the timing of replacement.

As described above, in the present first embodiment, time period Tc from the start of charging of capacitor 15 to the establishment of the communication between communication circuits 31 and 41 is measured. Then, when the measured time period Tc is shorter than determination time period TcL, it is determined that capacitor 15 needs to be replaced with a new capacitor. Thus, it can be easily and quickly determined whether or not each of 3 × N capacitors 15 included in 3 × N unit converters 5 needs to be replaced with a new capacitor.

Further, even when it is determined that capacitor 15 does not need to be replaced with a new capacitor, the timing at which capacitor 15 should be replaced with a new capacitor is estimated. Therefore, new capacitor 15 can be prepared at this estimated timing, so that a shortage of new capacitor 15 can be prevented in advance.

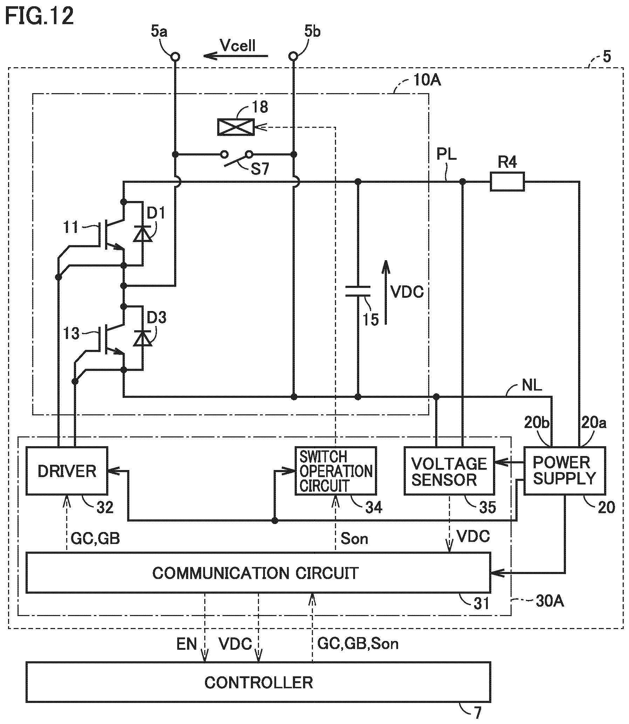

Fig. 12 is a circuit block diagram showing a modification of the first embodiment, in comparison with Fig. 2. Referring to Fig. 12, the present modification is different from the first embodiment in that, in each unit converter 5, main circuit 10 and control circuit 30 are replaced with a main circuit 10A and a control circuit 30A, respectively.

Main circuit 10A is the same as main circuit 10 except that switching elements 12 and 14 and diodes D2 and D4 are removed from main circuit 10, and second terminal 5b is connected to DC line NL. Main circuit 10A is configured of a half-bridge circuit including a capacitor. Control circuit 30A is the same as control circuit 30 except that driver 33 for switching elements 12 and 14 is removed from control circuit 30.

Main circuit 10A turns on and off switching elements 11 and 13 to output, between first terminal 5a and second terminal 5b, a voltage pulse having an amplitude corresponding to voltage VDC across the terminals of capacitor 15, and thereby, converts the DC power into AC power. Cell voltage Vcell between first terminal 5a and second terminal 5b is controlled by turning on and off each of switching elements 11 and 13.

Specifically, when switching element 11 is on and switching element 13 is off, cell voltage Vcell is equal to voltage VDC across the terminals of capacitor 15. When switching element 11 is off and switching element 13 is on, cell voltage Vcell is 0V.

The entire voltage in each of arms A1 to A3 is equal to the sum of cell voltages Vcell of N unit converters 5 included in each of arms A1 to A3. Therefore, by controlling each of switching elements 11 and 13 in each unit converter 5 to be turned on and off, the entire voltage in each of arms A1 to A3 can be controlled.

Further, during the initial charging of capacitor 15, switch S7 is opened and switching elements 11 and 13 are turned off. It is assumed that unit converter 5 in Fig. 12 is unit converter 5 in the first stage of arm A1.

When AC voltage Vu on AC line UL (Fig. 1) is higher than AC voltage Vv on AC line VL, a current flows through a path from first terminal 5a to second terminal 5b via diode D1 and capacitor 15. Capacitor 15 is charged with this current, and voltage VDC across the terminals of capacitor 15 rises.

In contrast, when AC voltage Vu on AC line UL is lower than AC voltage Vv on AC line VL, a current flows through a path from second terminal 5b to first terminal 5a via diode D3, and thus, capacitor 15 is not charged, so that voltage VDC across the terminals of capacitor 15 does not change. In this way, capacitors 15 in all unit converters 5 in each of arms A1 to A3 are charged.

Since N unit converters 5 are connected in series in each of arms A1 to A3, voltage VDC of capacitor 15 in each unit converter 5 rises to a value obtained by dividing the peak value of the voltage (phase-to-phase voltages Vuv, Vvw, Vwu) applied to each of arms A1 to A3 by number N of unit converters 5 included in each of arms A1 to A3.

Since other configurations and operations are the same as those in the first embodiment, the description thereof will not be repeated. Also in the present modification, the same effect as that achieved in the first embodiment can be achieved.

### [Second Embodiment]

In the first embodiment, it is determined whether or not to replace capacitor 15 with a new capacitor based on the time period of charging of capacitor 15 at the time when power conversion device 1 is started up. On the other hand, in the second embodiment, it is determined whether or not to replace capacitor 15 with a new capacitor based on the time period of discharging of capacitor 15 at the time when power conversion device 1 is stopped.

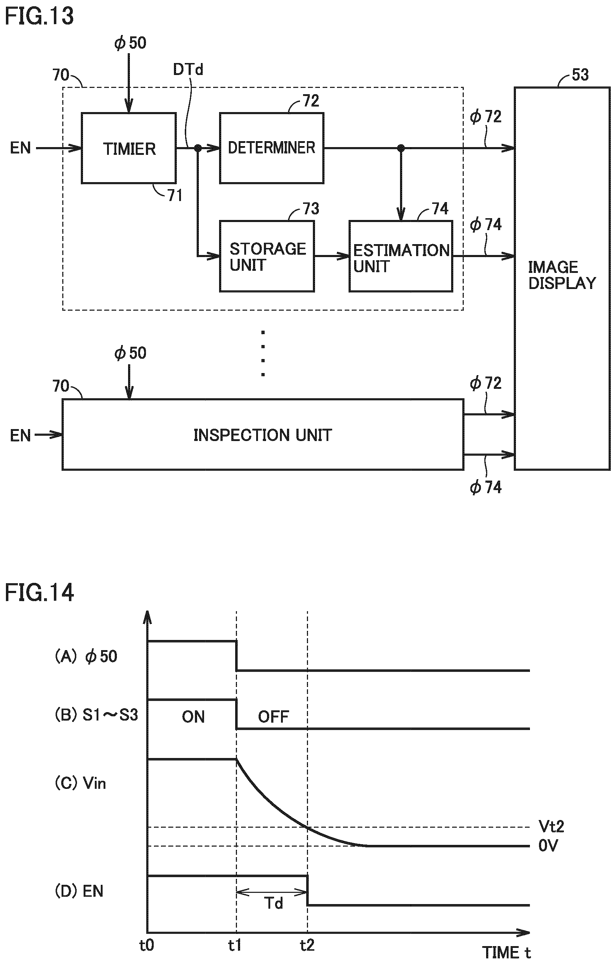

Fig. 13 is a block diagram showing a main part of a power conversion device according to the second embodiment of the present disclosure, in comparison with Fig. 7. Referring to Fig. 13, this power conversion device is different from power conversion device 1 in the first embodiment in that each inspection unit 52 is replaced with an inspection unit 70.

Inspection unit 70 includes a timer 71, a determiner 72, a storage unit 73, and an estimation unit 74. Timer 71 starts measuring a time period Td when output signal ϕ50 from control unit 50 is lowered from the "H" level to the "L" level, and stops measuring time period Td when signal EN from the corresponding unit converter 5 is raised from the "H" level to the "L" level, and then, outputs a signal DTd indicating the measured time period Td.

In other words, timer 71 measures time period Td from when switches S1 to S3 are turned off and discharging of capacitor 15 is started to when the communication between communication circuits 31 and 41 is interrupted. Then, timer 71 outputs signal DTd indicating the measured time period Td.

Fig. 14 is a time chart for illustrating the operation of timer 71. In Fig. 14, (A) shows a waveform of output signal ϕ50 from control unit 50, (B) shows the state of conduction of each of switches S1 to S3, (C) shows a waveform of DC input voltage Vin (Fig. 3) of power supply 20, and (D) shows a waveform of output signal EN from communication circuit 31.

During the operation of the power conversion device (time t0), signal ϕ50 is set at the "H" level, switches S1 to S3 are turned on, DC voltage Vin is set at a prescribed voltage, and signal EN is set at the "H" level.

When an instruction to stop the power conversion device is issued at time t1, signal ϕ50 is lowered to the "L" level and switches S1 to S3 are turned off. Thereby, discharging of capacitor 15 is started, voltage VDC across the terminals of capacitor 15 falls, and DC input voltage Vin of power supply 20 falls. The DC power of capacitor 15 is consumed by power supply 20 and control circuit 30 (Fig. 2).

When DC input voltage Vin of power supply 20 falls below second threshold voltage Vt2, the supply of power supply voltage VC5 from fifth power supply unit 26 (Fig. 3) to communication circuit 31 is stopped, and output signal EN from communication circuit 31 is lowered from the "H" level to the "L" level. Timer 71 measures time period Td from time t1 to time t2, and outputs signal DTd indicating the measured time period Td.

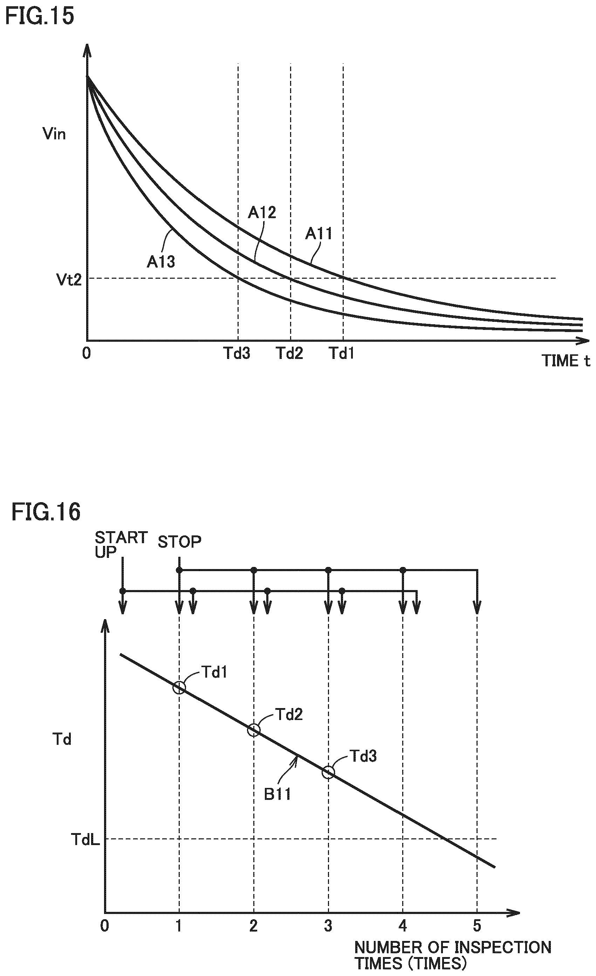

Fig. 15 is a time chart showing a change over time in waveform of DC voltage Vin shown in Fig. 14. In Fig. 15, a curve A11 shows a waveform occurring when the deterioration level of capacitor 15 is low, a curve A12 shows a waveform occurring when the deterioration level of capacitor 15 is middle, and a curve A13 shows a waveform occurring when the deterioration level of capacitor 15 is high.

As the deterioration level of capacitor 15 rises, the capacitance value of capacitor 15 decreases, the rate of falling of voltage VDC across the terminals of capacitor 15 rises, and the rate of falling of DC voltage Vin rises. Thus, as the deterioration level of capacitor 15 rises, time period Td during which DC voltage Vin is lower than second threshold voltage Vt2 shortens.

Fig. 15 shows the state in which time periods Td1, Td2, and Td3 measured from curves A11, A12, and A13 are sequentially reduced (Td1 > Td2 > Td3). Therefore, the deterioration level of capacitor 15 can be determined from time period Td.

Determiner 72 compares the length of time period Td indicated by signal DTd with the length of a determination time period TdL, and outputs a signal ϕ72 indicating the comparison result. When time period Td is longer than determination time period TdL, signal ϕ72 is set at the "L" level. When time period Td is shorter than determination time period TdL, signal ϕ72 is set at the "H" level. Determination time period TdL is obtained in advance by experiments.

Signal ϕ72 at the "L" level indicates that the deterioration level of the corresponding capacitor 15 is low and the corresponding capacitor 15 does not need to be replaced with a new capacitor. Signal ϕ72 at the "H" level indicates that the deterioration level of the corresponding capacitor 15 is high and the corresponding capacitor 15 needs to be replaced with a new capacitor. Signal ϕ72 is given to estimation unit 74 and image display 53.

Storage unit 73 stores signal DTd each time signal DTd is output from timer 71. When power conversion device 1 is started up and stopped a plurality of times, a plurality of signals DTd are sequentially output from timer 71, and the plurality of signals DTd are sequentially stored in storage unit 73.

When output signal ϕ72 from determiner 72 is at the "L" level, i.e., when it is determined that the corresponding capacitor 15 does not need to be replaced with a new capacitor, estimation unit 74 estimates the timing of replacement of capacitor 15 based on the plurality of signals DTd stored in storage unit 73, and then outputs a signal ϕ74 indicating the estimation result.

Fig. 16 is a diagram for illustrating the operation of estimation unit 74. It is assumed that the power conversion device is started up and stopped m times, capacitor 15 is inspected m times, and m signals DTd1 to DTdm are stored in storage unit 73. In this case, m is an integer of 2 or more. Fig. 16 shows a case in which m = 3.

Estimation unit 74 reads m signals DTd1 to DTdm from storage unit 73 and converts the read signals DTd1 to DTdm into time periods Td1 to Tdm. Then, estimation unit 74 writes time periods Td1 to Tdm in Fig. 16 in which the horizontal axis represents the number of inspection times and the vertical axis represents time period Td.

Then, estimation unit 74 draws an approximate curve B11 passing through time periods Td1 to Tdm, and obtains the number of inspection times Y at which curve B11 falls below determination time period TdL. Estimation unit 74 estimates that capacitor 15 should be replaced with a new capacitor at the Y-th inspection. Fig. 16 shows a case in which Y = 5. Estimation unit 74 outputs signal ϕ74 indicating the estimation result to image display 53.

Image display 53 displays the determination result indicated by output signal ϕ72 from determiner 72 and the estimation result indicated by output signal ϕ74 from estimation unit 74. Image display 53 displays the determination result and the estimation result for each of 3 × N capacitors 15.

Note that image display 53 may be caused to display: information specifying capacitor 15 determined to be replaced with a new capacitor; or information specifying capacitor 15 estimated to be replaced next time when the power conversion device is stopped. Further, image display 53 may be included in operation unit 6.

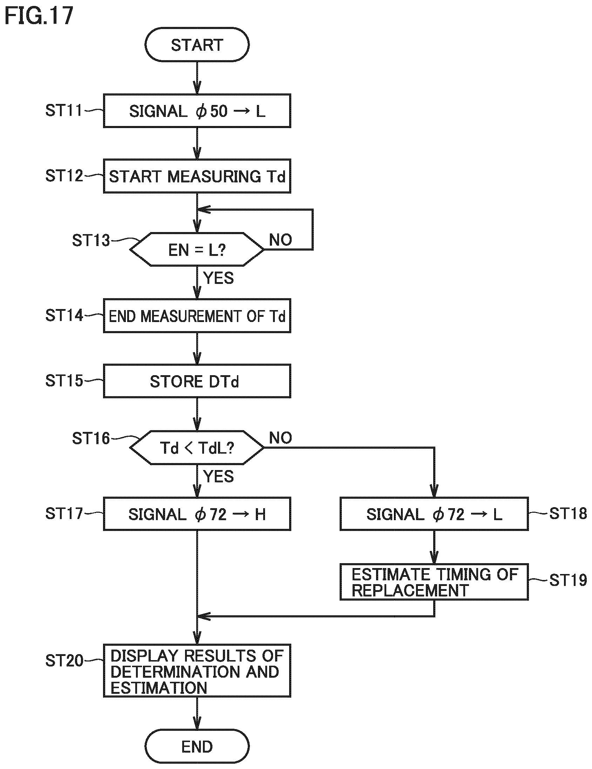

Fig. 17 is a flowchart illustrating the operation of control circuit 42 including inspection unit 70 shown in Fig. 13. When operation unit 6 issues an instruction to stop the power conversion device, control unit 50 lowers signal ϕ50 from the "H" level to the "L" level in step ST11. When signal ϕ50 is set at the "L" level, switches S1 to S3 are turned off to start discharging of capacitor 15, and, in step ST12, timer 71 starts measuring time period Td (Fig. 14).

In step ST13, timer 71 waits until signal EN from the corresponding unit converter 5 is set at the "L" level. Signal EN at the "L" level indicates that the communication between communication circuit 31 (Fig. 2) of unit converter 5 and communication circuit 41 (Fig. 4) of controller 7 has been interrupted.

When signal EN is set at the "L" level, then in step ST14, timer 71 ends the measurement of time period Td, and outputs signal DTd indicating the measured time period Td. In step ST15, signal DTd is stored in storage unit 73.

In step ST16, determiner 72 determines whether or not time period Td is shorter than determination time period TdL. When Td < TdL, signal ϕ72 is set at the "H" level in step ST17. Signal ϕ72 at the "H" level indicates that the corresponding capacitor 15 needs to be replaced with a new capacitor.

When Td > TdL, signal ϕ72 is set at the "L" level in step ST18. Signal ϕ72 at the "L" level indicates that the corresponding capacitor 15 does not need to be replaced with a new capacitor.

In step ST19, based on the plurality of signals DTd stored in storage unit 73, estimation unit 74 estimates the timing at which the corresponding capacitor 15 should be replaced with a new capacitor. In step ST20, image display 53 displays the determination result by determiner 72 and the estimation result by estimation unit 74.

The user of the power conversion device determines whether or not to replace capacitor 15 based on the result displayed on image display 53. In other words, when it is determined that capacitor 15 should be replaced with a new capacitor, the user replaces capacitor 15 with a new capacitor. Further, when the timing at which capacitor 15 should be replaced with a new capacitor is estimated, the user prepares a new capacitor 15 that will be required at that timing. Since other configurations and operations are the same as those in the first embodiment, the description thereof will not be repeated.

As described above, in the present second embodiment, time period Td from the start of discharging of capacitor 15 to the interruption of communication between communication circuits 31 and 41 is measured. Then, when the measured time period Td is shorter than determination time period TdL, it is determined that capacitor 15 needs to be replaced with a new capacitor. Therefore, it can be easily and quickly determined whether or not each of 3 × N capacitors 15 included in 3 × N unit converters 5 needs to be replaced with a new capacitor.

Further, even when it is determined that capacitor 15 does not need to be replaced with a new capacitor, the timing at which capacitor 15 should be replaced with a new capacitor is estimated. Therefore, new capacitor 15 can be prepared at the estimated timing, so that a shortage of new capacitor 15 can be prevented in advance.

It is needless to say that the first and second embodiments may be combined as appropriate. For example, both inspection units 52 and 70 may be provided inside controller 7, and, only when both inspection units 52 and 70 determine that capacitor 15 needs to be replaced with a new capacitor, then, capacitor 15 may be replaced with a new capacitor.

It should be understood that the embodiments disclosed herein are illustrative and non-restrictive in every respect. The present disclosure is defined by the scope of the claims, rather than the description above, and is intended to include any modifications within the meaning and scope equivalent to the scope of the claims.

### REFERENCE SIGNS LIST

1 power conversion device, S1 to S6 switch, 2, 3 transformer, R1 to R3 current-limiting resistor, UL, VL, WL AC line, C1 to C3 current transformer, L1 to L3 reactor, A1 to A3 arm, 5 unit converter, 6 operation unit, 7 controller, 8 commercial AC power supply, 9u, 9v, 9w power transmission line, 10, 10A main circuit, 11 to 14 switching element, PL, NL DC line, 15 capacitor, 18 excitation coil, R4 resistance element, 20, 40 power supply, 21 input voltage monitoring circuit, 22 to 26 power supply unit, 27, 50, 51 control unit, 30, 30A, 42 control circuit, 31, 41 communication circuit, 32, 33 driver, 34 switch operation circuit, 35 voltage sensor, 52, 70 inspection unit, 53 image display, 61, 71 timer, 62, 72 determiner, 63, 73 storage unit, 64, 74 estimation unit.

## Claims

1. A power conversion device comprising:
a power converter including a plurality of unit converters connected in series, the power converter being connected to an AC power supply; and
a controller that transmits a control signal to each of the plurality of unit converters, wherein
each of the plurality of unit converters includes
a main circuit including
a capacitor that stores DC power,
a rectifier element that converts AC power supplied from the AC power supply into DC power and supplies the DC power to the capacitor, and
a switching element that converts the DC power of the capacitor into AC power and supplies the AC power to the AC power supply,
a first communication circuit that is driven by the DC voltage supplied from the capacitor and receives the control signal, and
a driver that drives the switching element according to the control signal received by the first communication circuit,
the controller includes
a control circuit that generates the control signal,
a second communication circuit that transmits the control signal generated by the control circuit to the first communication circuit, and
an inspection unit that is provided to correspond to each of the plurality of unit converters to inspect the capacitor included in a corresponding unit converter of the plurality of unit converters, and
the inspection unit includes
a timer that measures at least one of:
a first time period from when power supply from the AC power supply to the power converter is started to when communication between the first communication circuit and the second communication circuit is established; and
a second time period from when the power supply from the AC power supply to the power converter is stopped to when the communication between the first communication circuit and the second communication circuit is interrupted, and
a determiner that determines that the capacitor included in the corresponding unit converter is required to be replaced with a new capacitor in at least one of:
a first case in which the first time period is shorter than a first determination time period; and
a second case in which the second time period is shorter than a second determination time period.

2. The power conversion device according to claim 1, wherein
each of the plurality of unit converters further includes
a power supply that
generates a power supply voltage based on the DC voltage when the DC voltage rises and exceeds a first threshold voltage, and
stops generating the power supply voltage when the DC voltage falls below a second threshold voltage,
the first communication circuit is driven by the power supply voltage,
when the power supply voltage is generated by the power supply, communication between the first communication circuit and the second communication circuit is established, and
when the power supply stops generating the power supply voltage, the communication between the first communication circuit and the second communication circuit is interrupted.

3. The power conversion device according to claim 1, wherein
each of the plurality of unit converters further includes
a voltage sensor that detects a voltage across terminals of the capacitor and outputs a signal indicating a detected value,
the first communication circuit transmits an output signal from the voltage sensor to the second communication circuit, and
the control circuit generates the control signal based on the output signal from the voltage sensor, the output signal being received by the second communication circuit.

4. The power conversion device according to claim 1, further comprising a display that displays results of determination by a plurality of the determiners.

5. The power conversion device according to claim 1, wherein
the power supply from the AC power supply to the power converter is started and stopped a plurality of times, and
the inspection unit includes
a storage unit that sequentially stores results of a plurality of measurements by the timer, and
an estimation unit that estimates a timing at which the capacitor included in the corresponding unit converter is to be replaced with a new capacitor, based on a content stored in the storage unit in at least one of:
a third case in which the first time period is longer than the first determination time period; and
a fourth case in which the second time period is longer than the second determination time period.

6. The power conversion device according to claim 5, further comprising a display that displays results of estimation by a plurality of the estimation units.

7. The power conversion device according to claim 1, further comprising a switch connected between the AC power supply and the power converter, wherein
the switch is
turned on when the power supply from the AC power supply to the power converter is started, and
turned off when the power supply from the AC power supply to the power converter is stopped.
